# EUROPEAN PATENT APPLICATION

(11) **EP 4 640 462 A1**
(43) Date of publication of application: **29.10.2025**
(21) Application number: 25170965.5
(22) Date of filing: 16.04.2025
(51) Int. Cl.: B60K 1/04, B62D 21/15

(54) **BATTERY UNIT**

(30) Priority: 26.04.2024 JP 2024072844
(71) Applicant: MAZDA MOTOR CORPORATION, Hiroshima 730-8670 (JP)
(72) Inventor: Fukuda, Ayaka, Aki-gun, Hiroshima 730-8670 (JP); Kyomure, Kota, Aki-gun, Hiroshima 730-8670 (JP); Kanamaru, Daisuke, Aki-gun, Hiroshima 730-8670 (JP); Kuroki, Yui, Aki-gun, Hiroshima 730-8670 (JP)
(74) Representative: von Tietzen und Hennig, Nikolaus

(57) **Abstract**

A battery case has a pair of first frames extending in a first direction, one of longitudinal-and-lateral directions, and a pair of second frames extending in a second direction, the other of the longitudinal-and-lateral directions, and is configured in a square frame shape such that the first and second frames enclose battery cells. The first frame includes a first contact face arranged to face the second frame and a first connection portion to connect to the second frame. The second frame includes a second contact face arranged to face the first frame and a second connection portion to connect to the first frame. The first frame has a step-shaped first step portion which forms a first space where at least part of the second connection portion of the second frame is stored in least part of the first contact face is provided at the first step portion.

## Description

### BACKGROUND OF THE INVENTION

The present invention relates to a battery unit configured to be provided below a floor panel of a vehicle, which comprises a battery case and battery cells stored in the battery case. The invention is further directed to a vehicle including the battery unit of the invention.

This kind of battery units is disclosed in Japanese Patent Laid-Open Publication No. 2016-97851, for example. This battery unit comprises a pair of first-and-second longitudinal frames which respectively have a hollow cross section and a pair of first-and-second lateral frames which respectively have another hollow cross section and connect to respective both-end portions of the first-and-second longitudinal frames via respective corner brackets. The corner bracket includes insertion holes to be inserted into respective hollow portions of the longitudinal frames and the lateral frames and an attachment portion to be attached to a vehicle body.

According to the battery unit disclosed in the above-described patent document, the impact resistance against any collision load applied from any direction in a vehicle collision can be properly dispersed to a whole part of the frames by the corner brackets disposed between end portions of the longitudinal frames and end portions of the lateral frames.

The battery unit of the above-described patent document has a structure in which the end portion of the longitudinal frame and the end portion of the lateral frame merely abut each other even if the corner backet is interposed therebetween.

Therefore, when the vehicle has a frontal collision, the collision load cannot be sufficiently transmitted from the lateral frames (extending in the lateral direction) to the longitudinal frames (extending in the longitudinal direction). Meanwhile, in a case where the vehicle has a side collision, the collision load cannot be transmitted to the lateral frames from the longitudinal frames properly.

Thus, there is a concern that the battery cells stored in the battery case may not be protected appropriately against the vehicle frontal or side collisions according to the battery unit of the above-described patent document.

### SUMMARY OF THE INVENTION

An object of the present invention is to provide a battery unit configured to be provided below the floor panel of the vehicle which can properly protect the battery cells stored in the battery case against both the vehicle frontal collision and the vehicle side collision.

The present invention is a battery unit which is provided below a floor panel of a vehicle, comprising a battery case provided with a pair of first frames extending in a first direction which is one of a longitudinal direction and a lateral direction of the vehicle and a pair of second frames extending in a second direction which is the other of the longitudinal direction and the lateral direction of the vehicle, and battery cells stored in the battery case, wherein the battery case is configured in a square frame shape such that the first frames and the second frames enclose the battery cells, the first frame includes a first contact face which is arranged to face the second frame and a first connection portion to connect to the second frame and the second frame includes a second contact face which is arranged to face the first frame and a second connection portion to connect to the first frame, the first frame has a step-shaped first step portion which forms a first space where at least part of the second connection portion of the second frame is stored, and at least part of the first contact face of the first frame is provided at the first step portion of the first frame.

Herein, it is assumed, for example, that the first direction is (corresponds to) the lateral direction of the vehicle, whereas the second direction is (corresponds to) the longitudinal direction of the vehicle. When the vehicle frontal collision happens, its collision load is applied to the first frame first, then transmitted to the second frame by way of the first contact face of the first frame. Meanwhile, when the vehicle side collision occurs, its collision load is applied to the second frame first, then transmitted to the first frame by way of the second contact face of the second frame.

To the contrary, in a case where it is assumed that the first direction is the longitudinal direction and the second direction is the lateral direction, the first frame (the first contact face) and the second frame (the second contact face) perform inversely, respectively, and the similar results may be obtained.

Thus, even when the vehicle has both the frontal collision and the side collision, both the collision loads can be supported at the first and second frames properly.

Particularly, the first connection portion of the first frame is provided with the step-shaped first step portion to form the first space. The first space of the first frame stores at least part of the second connection portion of the second frame. At least part of the first contact face is provided at the first step portion of the first frame.

Thereby, the first contact face of the first frame is configured to easily face the second frame. The collision load applied to the first frame can be easily transmitted to the second frame by way of the first contract face.

As described above, in the battery unit provided below the floor panel of the vehicle, the battery cells stored in the battery case can be properly protected against both the vehicle frontal collision and the vehicle side collision.

In an embodiment, the above-described second connection portion frame has a step-shaped second step portion which forms a second space where at least part of the first connection portion is stored, at least part of the above-described contact face is provided at the second step portion, and the first step portion and the second step portion are provided to engage with each other.

The second contact face of the second frame is configured to easily face the first frame. The collision load applied to the second frame can be easily transmitted to the first frame by way of the second contract face. Further, the first step portion of the first frame and the second step portion of the second frame is made to engage with each other, so that the first frame and the second frame can be assembled easily.

In another embodiment, the above-described first step portion of the first frame is configured to be formed in a step shape when viewed in a vertical direction.

In another embodiment, the first step portion of the first frame is configured to be formed in the step shape when viewed in the above-described second direction.

In another embodiment, the above-described second step portion of the second frame is configured to be formed in the step shape when viewed in the vertical direction.

In another embodiment, the above-described second step portion of the second frame is configured to be formed in the step shape when viewed in the above-described first direction.

In another embodiment, the frames which extend in the longitudinal direction of the vehicle have an inverse L-shape cross-section. In particular, these frames extending in the longitudinal direction comprise a flange portion which protrudes to an outward side of the battery case in the lateral direction. Further, the flange portion may be formed integrally at an upper portion of said frames extending in the longitudinal direction. A plurality of fixation holes may be formed at plural points of the flange portion. The fixation holes are configured to receive a fixation member for fixing the battery case to a vehicle. In particular, the fixation holes receive a fixation member in the vertical direction when mounted in the vehicle.

In another embodiment, the first and/or second frames are made of a square pipe. In another embodiment the first and/or second frames are extruded aluminum frames.

In another embodiment, the step-shaped first portion of said first frame includes a projection portion extending in the first direction and in the vertical direction at a point of the first frame located at its outside end portion in the first direction. The projection portion forms at least a portion of the first contact face.

In another embodiment, the step-shaped second portion of the second frame includes a projection portion extending in the second direction and in the vertical direction at a point of the second frame located at its outside end portion in the second direction. The projection portion forms at least a portion of the second contact face.

Another aspect of the invention is directed to a vehicle including a floor panel and a battery unit according to the aforementioned invention. The battery unit may provided below the floor panel.

In another embodiment of the vehicle, the above-described battery case is provided with a pair of lateral frames which are either one of the first frames and the second frames and extend in the lateral direction and a pair of longitudinal frames which are the other of the first frames and the second frames and extend in the longitudinal direction, the lateral frame includes a lateral-frame-side contact face which is either one of the first contact face and the second contact face, the vehicle comprises a pair of front side frames which extend forward from a forward side of the floor panel with a specified gap (distance) formed, in the lateral direction, therebetween and form a vehicle body together with the floor panel, and the lateral-frame-side contact face of the lateral frame positioned on the forward side is provided to face the longitudinal frame and located at a specified position so as to overlap with a rear end portion of the front side frame in a vertical direction.

When the vehicle frontal collision happens, its collision load is applied to the front side frame first, then transmitted to the front-side lateral frame from the rear end portion of the front side frame, and finally transmitted to the longitudinal frame by way of the lateral-frame-side contact face of the front-side lateral frame. The lateral-frame-side contact face of the front-side lateral frame is located at the specified position so as to overlap with the rear end portion of the front side frame in the vertical direction. Thus, the collision load of the vehicle frontal collision can be smoothly transmitted to the front side frame, the front-side lateral frame, and the longitudinal frame in order.

In another embodiment of the vehicle, the battery case is provided with a pair of longitudinal frames which are either one of the first frames and the second frames and extend in the longitudinal direction and a pair of lateral frames which are the other of the first frames and the second frames and extend in the lateral direction, the longitudinal frame includes a longitudinal-frame-side contact face which is either one of the first contact face and the second contact face, the vehicle comprises a pair of side sills which extend in the longitudinal direction along both-side edge portions, in the lateral direction, of the floor panel and form a vehicle body together with the floor panel, the longitudinal frame is fixed to the side sill with a fixation member, and the longitudinal-frame-side contact face of the longitudinal frame is provided to face the lateral frame and located at a specified position so as to overlap with the fixation member in the vertical direction.

When the vehicle side collision happens, its collision load is applied to the side sill first, then transmitted to the longitudinal frame by way of the fixation member (to fix the longitudinal frame to the side sill), and finally transmitted to the lateral frame by way of the longitudinal-frame-side contact face of the longitudinal frame. The longitudinal-frame-side contact face of the longitudinal frame is located at the specified position so as to overlap with the fixation member in the vertical direction. Thus, the collision load of the vehicle side collision can be smoothly transmitted to the side sill, the fixation member, the longitudinal frame, and the lateral frame in order.

According to the present invention, the battery cells stored in the battery case can be properly protected against both the vehicle frontal collision and the vehicle side collision in the battery unit provided below the floor panel of the vehicle.

The present invention will become apparent from the following description which refers to the accompanying drawings.

### BRIEF DESCRIPTION OF THE DRAWINGS

FIG. **1** is an upper view of a vehicle-body structure of a vehicle according to a first embodiment, when viewed from an upper side.
FIG. **2** is a perspective view of the vehicle-body structure of the vehicle according to the first embodiment.
FIG. **3** is a view of a battery unit according to the first embodiment.
FIG. **4** is an upper view of details of a connection point of a longitudinal frame and a lateral frame according to the first embodiment, when viewed from the upper side.
FIG. **5** is a view showing a positional relationship between the lateral frame and a front side frame according to the first embodiment.
FIG. **6** is a view showing a positional relationship between the longitudinal frame and a side sill according to the first embodiment.
FIG. **7** is an upper view of details of a connection point of the longitudinal frame and the lateral frame according to a second embodiment, when viewed from the upper side.
FIG. **8** is a perspective view of details of a connection point of the longitudinal frame and the lateral frame according to a third embodiment.

### DETAILED DESCRIPTION OF THE INVENTION

Hereafter, embodiments of the present invention will be specifically described referring to the accompanying drawings. The following description of the embodiments relate to exemplifications of the present invention, and therefore the present invention is not be limited in its applications or uses by that.

### <EMBODIMENT 1>

A battery unit **30** of a vehicle **A** according to a first embodiment will be described. In the following description, a longitudinal direction, a lateral direction, and a vertical direction are respectively defined based on a relative position to the vehicle **A.** In the figures, these directions are shown by respective arrows. The longitudinal direction is an advancing direction of the vehicle **A.** The longitudinal direction is an example of the second direction according to the present invention, which is shown by an arrow X. The lateral direction matches a vehicle width direction of the vehicle **A.** The lateral direction is an example of the first direction of the present invention, which is shown by an arrow Y. The vertical direction corresponds to a height direction of the vehicle **A,** which is shown by an arrow Z.

### (Vehicle-Body Structure)

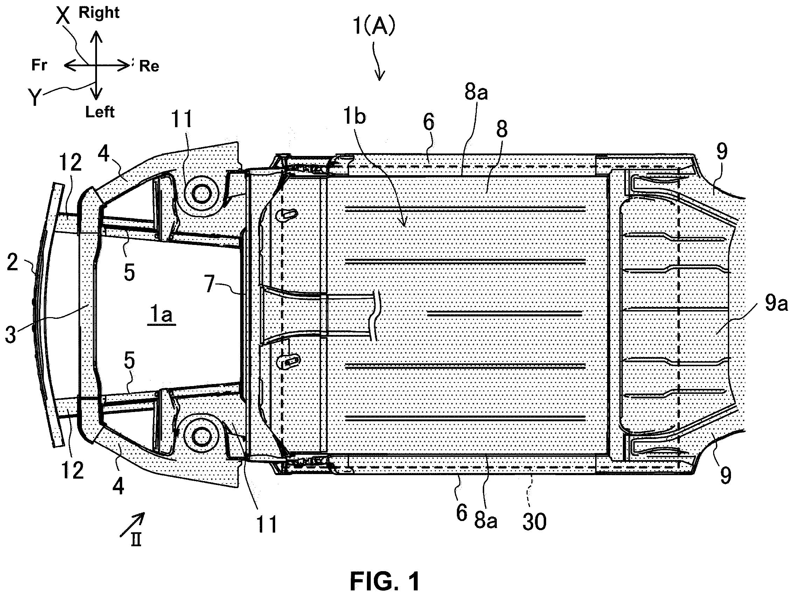

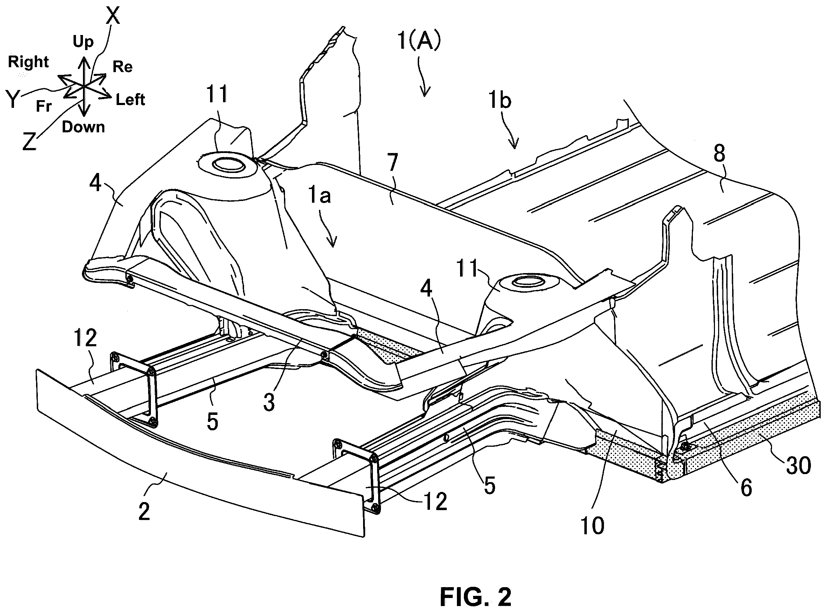

FIG. **1** is an upper view of a structure of a vehicle body **1** of the vehicle **A,** when viewed from an upper side. FIG. **2** is a perspective view of the structure of the vehicle body **1** of the vehicle **A,** when viewed from a direction of an arrow II in FIG. **1****.** As shown in FIG. **1****,** the vehicle **A** comprises a bumper beam **2,** a shroud upper member **3,** a pair of apron members **4,** a pair of front side frames **5,** a pair of side sills **6,** a dash panel **7,** a floor panel **8,** and a pair of rear side frames **9.** The vehicle **A** further comprises a pair of torque boxes **10,** a pair of suspension housing **11,** and a pair of crash cans **12.** The vehicle **A** has a battery unit **30.**

The vehicle **A** is an electric automobile driven by an electric motor. This motor (not illustrated) is installed in a front-side space **1a** provided at a front part of the vehicle body **1.** A cabin **1b** is formed at a middle part of the vehicle body **1.** A floor panel **8** is provided at the middle part of the vehicle body **1** as well. The floor panel **8** extends in the longitudinal direction and in the lateral direction, which is of a roughly rectangular shape when viewed in the vertical direction. The floor panel **8** forms a floor face of the cabin **1b**.

A battery unit **30** is installed at the vehicle **A.** The battery unit **30** is an electric source to drive the motor for traveling of the vehicle **A.** As shown by a broken line in FIG. **1****,** the battery unit **30** is provided below the floor panel **8** of the vehicle **A** such that it extends along the floor panel **8.**

The battery unit **30** has a rectangular exterior view in a plan view which substantially matches the floor panel **8.** The battery unit **30** will be described later.

As shown in FIG. **2****,** the dash panel **7** partitions the front-side space **1a** from the cabin **1b**. This dash panel **7** extends in the vertical direction and in the lateral direction.

A pair of side sills **6** are provided at right-and-left both sides of the middle part of the vehicle body **1.** The side sill **6** is made of a pole-shaped member and superior in strength and rigidity. The side sills **6** extend in the longitudinal direction in parallel along both-side edge portions **8a,** in the lateral direction, of the floor panel **8.** The side sills **6** form the vehicle body **1** together with the floor panel **8.**

A pair of rear side frames **9** are connected to respective rear ends of the pair of side sills **6.** The rear side frames **9** extend rearward. A rear floor panel **9a** is provided between the rear side frames **9** such that it is continuous from the floor panel **8.**

As shown in FIGS. **1** and **2****,** a pair of front side frame **5** extend forward from a front side of the floor panel **8** such that they are separated from each other in the lateral direction. The front side frames **5** form the vehicle body **1** together with the floor panel **8.** The front side frames **5** extend slightly obliquely forward-and-outward, in the lateral direction, of the vehicle body **1** when viewed in the vertical direction. Each of the front side frame frames **5** is made of a pole-shaped member which has a rectangular cross section.

The front side frame **5** is joined to a front end portion of the floor panel **8** and the torque box **10.**

The suspension housing **11** is provided at a frond side of each of both-end portions, in the lateral direction, of the dash panel 7. A lower end of the suspension housing **11** is connected to the front side frame **5.** An apron member **4** is connected to an upper end portion of the suspension housing **11.**

The apron member **4** extends forward from an outward side of the suspension housing **11.** The apron member **4** is curved inward toward a vehicle forward side. Respective front ends of the booth apron members **4** are interconnected by the shroud upper member **3** extending in the lateral direction.

The bumper beam **2** extending in the lateral direction is arranged below and in front of the shroud upper member **3.** Respective front ends of the front side frame **5** are connected to both-side end portions, in the lateral direction, of the bumper beam **2** via respective crash cans **12.**

### (Battery Unit)

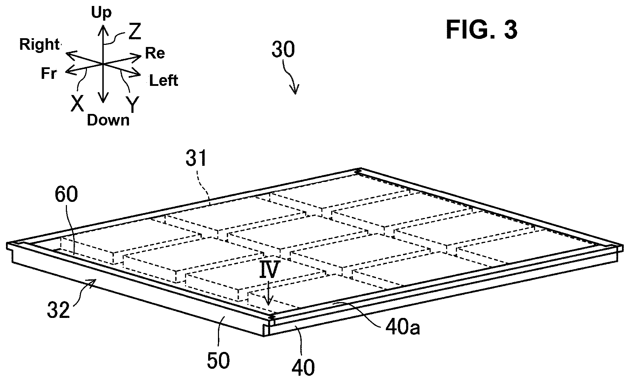

FIG. **3** shows the battery unit **30** of the first embodiment. The battery unit **30** comprises plural battery cells **31** and the battery case **32.** The plural battery cells **31** are stored at the battery case **32.** The battery unit **32** is arranged below the floor panel **8** of the vehicle **A** in a state where the battery cells **31** are stored at the battery case **32.**

The battery cell **31** is made from lithium-ion battery or the like. The plural battery cells **31** are all connected electrically and able to produce a specified high-voltage output. Each batter cell **31** is formed in a rectangular-block shape (rectangular parallelepiped), considering its efficient installment. In the present embodiment, the twelve battery cells **31** are arranged closely to each other inside the battery case **32** such that four of them are aligned in the lateral direction and three of them are aligned in the longitudinal direction.

The battery case **32** comprises a pair of longitudinal frames **40,** a pair of lateral frames **50,** and a bottom member **60.** The longitudinal direction **40** is an example of the second frame of the present invention. The lateral frame **50** is an example of the first frame of the present invention.

The longitudinal frames **40** extend in the longitudinal direction in parallel such that they are separated from each other in the lateral direction. Meanwhile, the lateral frames **50** extend in the lateral direction in parallel such that they are separated from each other in the longitudinal direction. The battery case **32** is configured such that the lateral frames **50** and the longitudinal frames **40** are combined in a square-frame shape in the plane view, enclosing the battery cells **31.** In details, the battery case **32** is formed in a rectangular shape with its long side extending in the longitudinal direction and its short side extending in the lateral direction.

Hereinafter, there is a case where the direction toward an inside of the battery case **32** in the longitudinal direction (the lateral direction) (i.e., the side where the battery cells **31** are arranged) is called an inward side of the longitudinal direction (the lateral direction) and the direction toward an outside of the battery case **32** in the longitudinal direction (the lateral direction) (i.e., the side where the battery cells **31** are not arranged) is called an outward side of the longitudinal direction (the lateral direction).

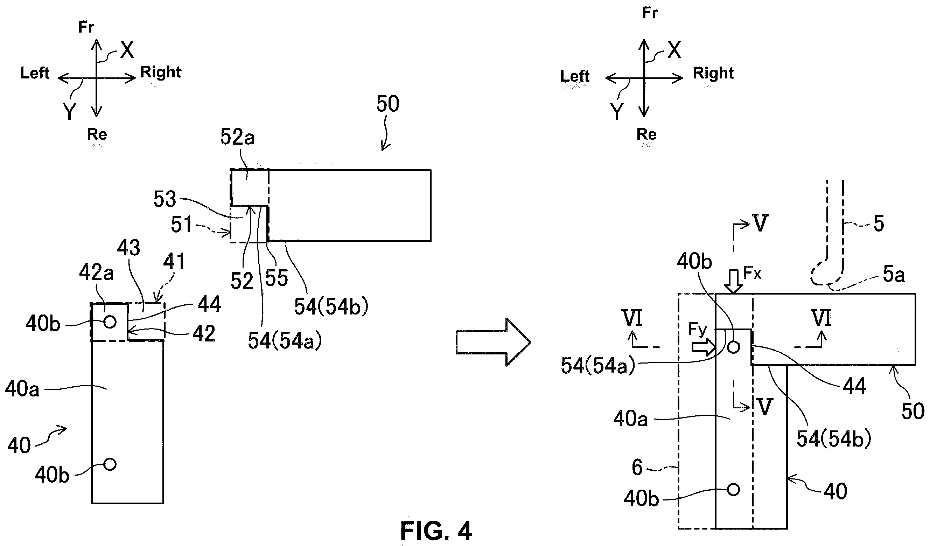

The longitudinal frame **40** is made of a square pipe. The longitudinal frame **40** has an inverse-L shaped cross section. A flange portion **40a** protruding outward in the lateral direction is formed integrally at an upper portion of the longitudinal frame **40.** Fixation holes **40b** are formed at plural points of the flange portion **40a** of the longitudinal frame **40** (see FIG. **4****).** These plural points are separated from each other in the longitudinal direction of the flange portion **40a.** The fixation hole **40b** is provided to penetrate the flange portion **40a** in the vertical direction. A fixation member **70** for fixing the longitudinal frame **40** to the side sill **6** is inserted into the fixation hole **40b,** which is not described specifically.

The lateral fame **50** is made of another square pipe. The lateral frame **50** has a square-shaped cross section. Each of the longitudinal frame **40** and the lateral frame **50** is an extruded aluminum frame, for example.

The bottom member **60** is a plate member to form a bottom face of the battery case **32.** The bottom member **60** covers a lower portion of the longitudinal frame **40,** a lower portion of the lateral frame **50,** and a space enclosed by the longitudinal frame **40** and the lateral frame **50** from below. A lid member to cover over the battery case **32** may be provided, which is not illustrated here.

### (Connection Point between Longitudinal Frame and Lateral Frame)

FIG. **4** is an upper view of details of a connection point of the longitudinal frame **40** and the lateral frame **50,** when viewed from the upper side. FIG. **4** shows an area of IV shown in FIG. **3****.**

A step-shaped longitudinal-frame-side step portion **42** is provided at a longitudinal-frame-side connection portion **41** of the longitudinal frame **40** to the lateral frame **50.** The longitudinal-frame-side connection portion **41** is an example of the second connection portion of the present invention. The longitudinal-frame-side connection portion **41** is a connection point of the longitudinal frame **40** to the lateral frame **50** (see a two-dotted line in FIG. **4****).** The longitudinal-frame-side step portion **42** is an example of the second step of the present invention. The longitudinal-frame-side step portion **42** is formed in a step shape when viewed in the vertical direction.

Specifically, the longitudinal-frame-side step portion **42** includes a longitudinal projection portion **42a.** The longitudinal projection portion **42a** extends toward the outside of the longitudinal direction and in the vertical direction at a point located at an outside end portion, in the longitudinal direction, and an outside portion, in the lateral direction, of the longitudinal frame **40.** A longitudinal-frame-side space **43** is formed at a point located at the outside end portion, in the longitudinal direction, and an inside portion, in the lateral direction, of the longitudinal frame **40.** The longitudinal-frame-side space **43** is an example of the second space of the present invention. The longitudinal-frame-side step portion **42** forms a longitudinal-frame-side space **43.**

The longitudinal frame **40** includes a longitudinal-frame-side contact face **44.** The longitudinal-frame-side contact face **44** is an example of the second contract face of the present invention. The longitudinal-frame-side contact face **44** is provided to face the inward side in the lateral direction so as to face the lateral frame **50.** At least part of the longitudinal-frame-side contact face **44** is provided at the longitudinal-frame-side step portion **42.** Specifically, the longitudinal-frame-side contact face **44** is provided at a face which faces the inward side, in the lateral direction, of the longitudinal projection portion **42a** of the longitudinal-frame-side step portion **42.** In this example, a whole part of the longitudinal-frame-side contact face **44** is provided at the longitudinal-frame-side step portion **42.**

A step-shaped lateral-frame-side step portion **52** is provided at the lateral-frame-side connection portion **51** of the lateral frame **50** to the longitudinal frame **40.** The lateral-frame-side connection portion **51** is an example of the first connection portion of the present invention. The lateral-frame-side connection portion **51** is a connection point of the lateral frame **50** to the longitudinal frame **40** (see the two-dotted line in FIG. **4****).** The lateral-frame-side step portion **52** is an example of the first step portion of the present invention. The lateral-frame-side step portion **52** is formed in the step shape when viewed in the vertical direction.

Specifically, the lateral-frame-side step portion **52** includes a lateral projection portion **52a.** The lateral projection portion **52a** extends in the lateral direction and in the vertical direction at a point located at an outside end portion, in the lateral direction, of the lateral frame **50** and an outside portion, in the longitudinal direction, of the lateral frame **50.** A lateral-frame-side space **53** where the lateral projection **52a** does not exist is formed at a point located at the outside end portion, in the lateral direction, of the lateral frame **50** and an inside portion, in the longitudinal direction, of the lateral frame **50.** The lateral-frame-side space **53** is an example of the first space of the present invention. The lateral-frame-side step portion **52** forms the lateral-frame-side space **53.**

The longitudinal-frame-side step portion **42** of the longitudinal frame **40** and the lateral-frame-side step portion **52** of the lateral frame **50** engage with each other.

The lateral frame **50** includes a lateral-frame-side contact face **54.** The lateral-frame-side contact face **54** is an example of the first contact face of the present invention. The lateral-frame-side contact face **54** is provided to face the longitudinal frame **40.** At least part of the lateral-frame-side contact face **54** is provided at the lateral-frame-side step portion **52.** Specifically, a portion **54a** of the lateral-frame-side contact face **54** is provided at a face portion of the lateral projection portion **52a** of the lateral-frame-side step portion **52** which faces the inward side in the longitudinal direction. Another portion **54b** of the lateral-frame-side contact face **54** is provided at a face of a corner portion **55** of the lateral-frame-side connection portion **51** which is positioned slightly on the inward side, in the lateral direction, of the lateral-frame-side step portion **52.**

The longitudinal-frame-side space **43** of the longitudinal frame **40** stores at least part of the lateral-frame-side connection portion **51** of the lateral frame **50.** Specifically, the longitudinal-frame-side space **43** of the longitudinal frame **40** stores the corner portion **55** of the lateral-frame-side connection portion **51** of the lateral frame **50.**

The lateral-frame-side space **53** of the lateral frame **50** stores at least part of the longitudinal-frame-side connection portion **41** of the longitudinal frame **40.** Specifically, the lateral-frame-side space **53** of the lateral frame **50** stores the longitudinal projection portion **42a** of the longitudinal-frame-side step portion **42** at the longitudinal-frame-side connection portion **41** of the longitudinal frame **40.**

### (Positional Relationship between Lateral Frame and Front Side Frame)

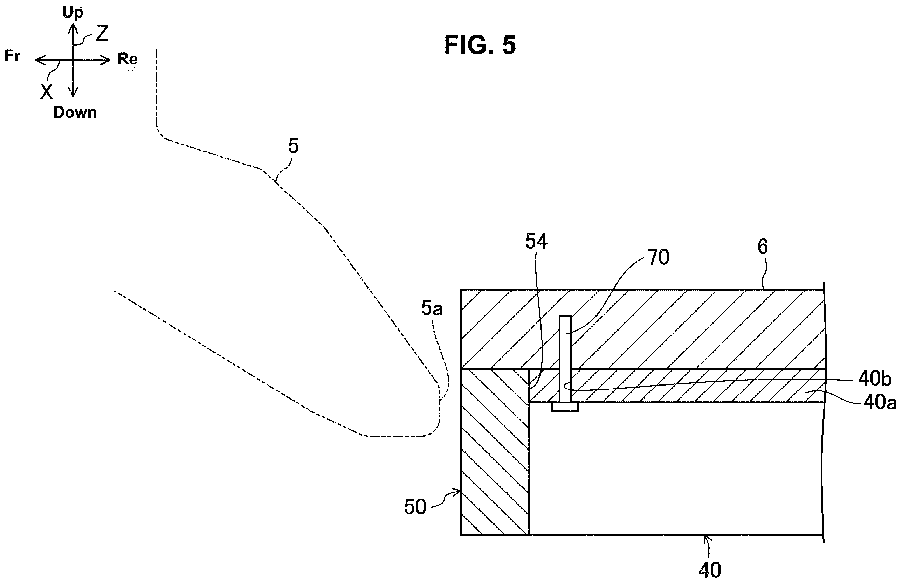

FIG. **5** is a sectional view showing a positional relationship between the lateral frame **50** and the front side frame **5,** when viewed from a direction of an arrow V in FIG. **4****.** The lateral-frame-side contact face **54** of the front-side lateral frame **50** faces the longitudinal frame **40.** The lateral-frame-side contact face **54** of the front-side lateral frame **50** is located at a specified position so as to overlap with a rear end portion **5a** of the front side frame **5** in the vertical direction.

### (Positional Relationship between Longitudinal Frame and Side Sill)

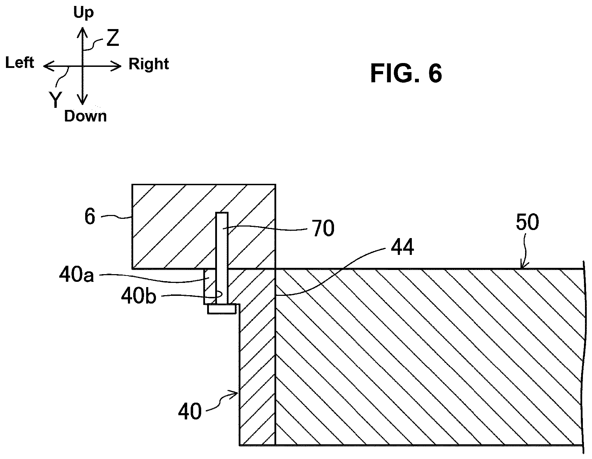

FIG. **6** is a sectional view showing a positional relationship between the longitudinal frame **40** and the side sill **6,** when viewed from a direction of an arrow VI in FIG. **4****.**

A flange portion **40a** which protrudes outward is formed integrally with an upper portion of the longitudinal frame **40.** The side sill **6** is arranged above the flange portion **40a** of the longitudinal frame **40.** The flange portion **40a** of the longitudinal frame **40** is fixed to the side sill **6.** Specifically, the flange portion **40a** of the longitudinal frame **40** is fixed to the side sill **6** by a fixation member **70.** The fixation member **70** is inserted into a fixation hole **40b** which is provided at the flange portion **40a.** The fixation member **70** is a bolt, for example.

The longitudinal-frame-side contact face **44** of the longitudinal frame **40** faces the lateral frame **50.** This longitudinal-frame-side contact face **44** is located at a specified position so as to overlap with the fixation member **70** in the vertical direction.

### (Effects)

When the vehicle **A** has a frontal collision, a collision load of the vehicle frontal collision (hereafter, referred to as a "frontal-collision load Fx") is applied to the lateral frame **50** first, and then transmitted to the longitudinal frame **40** by way of the lateral-frame-side contact face **54** of the lateral frame **50.** Meanwhile, when the vehicle **A** has a side collision, a collision load of the vehicle side collision (hereafter, referred to as a "side-collision load Fy") is applied to the longitudinal frame **40** first, and then transmitted to the lateral frame **50** by way of the longitudinal-frame-side contact face **44** of the lateral frame **40.**

Thus, even when the vehicle **A** has the frontal collision or the side collision, the collision load can be supported by the lateral frame **50** or the longitudinal frame **40.**

The step-shaped lateral-frame-side step portion **52** to form the lateral-frame-side space **53** is provided at the lateral-frame-side connection portion **51** of the lateral frame **50.** The lateral-frame-side space **53** of the lateral frame **50** stores at least part of the longitudinal-frame-side connection portion **41** of the longitudinal frame **40.** At least part of the lateral-frame-side contact face **54** of the lateral frame **50** is provided at the lateral-frame-side step portion **52.**

Thus, the lateral-frame-side contact face **54** of the lateral frame **50** faces the longitudinal frame **40.** Thereby, the frontal-collision load Fx applied to the lateral frame **50** is transmitted to the longitudinal frame **40** by way of the lateral-frame-side contact face **54.**

Likewise, the step-shaped longitudinal-frame-side step portion **42** to form the longitudinal-frame-side space **43** is provided at the longitudinal-frame-side connection portion **41** of the longitudinal frame **40.** The longitudinal-frame-side space **43** of the longitudinal frame **40** stores at least part of the lateral-frame-side connection portion **51** of the lateral frame **50.** At least part of the longitudinal-frame-side contact face **44** of the longitudinal frame **40** is provided at the longitudinal-frame-side step portion **42.**

Thus, the longitudinal-frame-side contact face **44** of the longitudinal frame **40** faces the lateral frame **50.** Thereby, the side-collision load Fy applied to the longitudinal frame **40** is transmitted to the lateral frame **50** by way of the longitudinal-frame-side contact face **44.**

As described above, in the battery unit **30** provided below the floor panel **8** of the vehicle **A,** the battery cells **31** stored in the battery case **32** can be properly protected against both the vehicle frontal collision and the vehicle side collision.

Further, the lateral-frame-side step portion **52** of the lateral frame **50** and the longitudinal-frame-side step portion **42** of the longitudinal frame **40** are made to engage with each other, so that the lateral frame **50** and the longitudinal frame **40** can be assembled easily.

When the frontal collision of the vehicle **A** happens, the frontal-collision load Fx is applied to the front side frame **5** first, then transmitted to the front-side lateral frame **50** from the rear end portion **5a** of the front side frame **5,** and finally transmitted to the longitudinal frame **40** by way of the lateral-frame-side contact face **54** of the front-side lateral frame **50.** The lateral-frame-side contact face **54** of the front-side lateral frame **50** is located at the specified position so as to overlap with the rear end portion **5a** of the front side frame **5** in the vertical direction.

Thus, the frontal-collision load Fx can be smoothly transmitted to the front side frame **5,** the front-side lateral frame **50,** and the longitudinal frame **40** in order.

When the side collision of the vehicle **A** happens, its collision load is applied to the side sill **6** first, then transmitted to the longitudinal frame **40** by way of the fixation member **70** (to fix the longitudinal frame **40** to the side sill **6),** and finally transmitted to the lateral frame **50** by way of the longitudinal-frame-side contact face **44** of the longitudinal frame **40.** The longitudinal-frame-side contact face **44** of the longitudinal frame **40** is located at the specified position so as to overlap with the fixation member **70** in the vertical direction.

Thus, the side-collision load Fy can be smoothly transmitted to the side sill **6,** the fixation member **70,** the longitudinal frame **40,** and the lateral frame **50** in order.

### <EMBODIMENT 2>

A second embodiment will be described. In the following description, the same structures as the above-described embodiment have the same reference characters and their specific descriptions are omitted here.

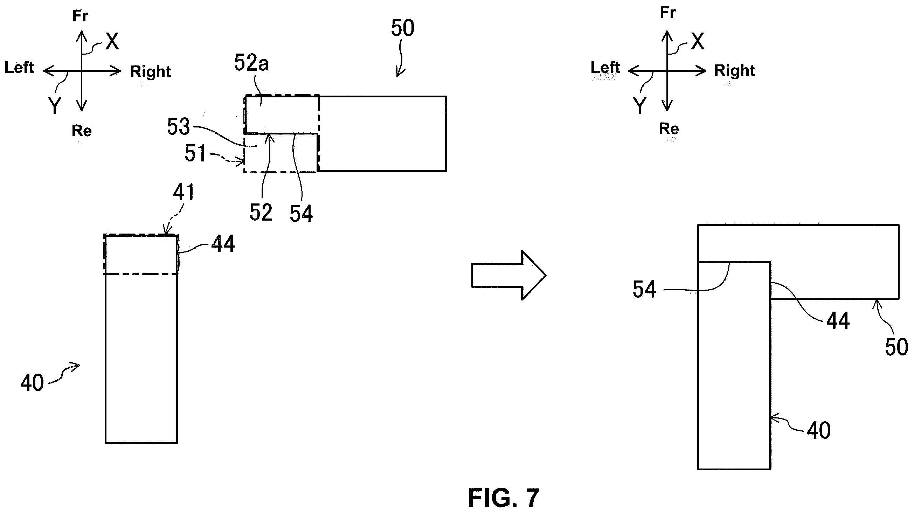

FIG. **7** is an upper view of details of a connection point of the longitudinal frame **40** and the lateral frame **50** according to the second embodiment, when viewed from the upper side.

In the present embodiment, similarly to the first embodiment, the lateral-frame-side connection portion **51** of the lateral frame **50** to the longitudinal frame **40** is provided with the step-side lateral-frame-side step portion **52.** However, differently from the first embodiment, the step-shaped longitudinal-frame-side step portion **42** is not provided at the longitudinal-frame-side connection portion **41** of the longitudinal frame **40** to the lateral frame **50** in the present embodiment.

The lateral-frame-side space **53** of the lateral frame **50** stores a whole part of the longitudinal-frame-side connection portion **41** of the longitudinal frame **40.**

The other structure is the same as the first embodiment. The present embodiment provides the same effects as the first embodiment.

### <EMBODIMENT 3>

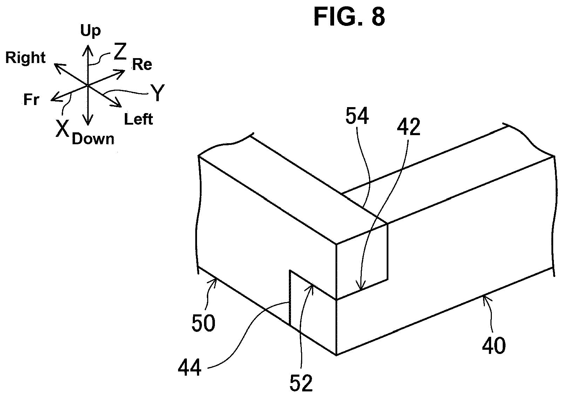

A third embodiment will be described. In the following description, the same structures as the above-described embodiments have the same reference characters and their specific descriptions are omitted here. FIG. **8** is a perspective view of details of a connection point of the longitudinal frame **40** and the lateral frame **50** according to a third embodiment.

In the present embodiment, the longitudinal-frame-side step portion **42** is formed in the step shape when viewed in the lateral direction. The lateral-frame-side step portion **52** is formed in the step shape when viewed in the longitudinal direction.

The other structure is the same as the first embodiment. The present embodiment provides the same effects as the first embodiment.

### <Other Embodiments>

The present invention is not limited to the above-described embodiments, but any other modifications, replacements, or combinations are applicable.

In the above-described embodiments, the first direction is set at the lateral direction and the second direction is set at the longitudinal direction, but these are not to be limited. That is, the first direction may be the lateral direction and the second direction may be the longitudinal direction. In this case, the same effects can be obtained as well.

The first direction of the present invention is either one of the longitudinal direction and the lateral direction. In this case, the second direction is the other one. The longitudinal frame **40** is either one of the first frame and the second frame of the present invention. Likewise, the lateral-frame-side contact face **54** is either one of the first contact face and the second contact face of the present invention. The longitudinal-frame-side contact face **44** is the other one.

The present invention is applicable to the battery unit, and therefore it is very useful and has the high availability in this industrial field.

## Claims

1. A battery unit (30) which is configured to be provided below a floor panel (8) of a
vehicle (A), the battery unit (30) comprising:
a battery case (32) provided with a pair of first frames (50) extending in a first direction which is one of a longitudinal direction and a lateral direction of the vehicle (A) and a pair of second frames (40) extending in a second direction which is the other of the longitudinal direction and the lateral direction of the vehicle (A); and
battery cells (31) stored in the battery case (32),
wherein said battery case is (32) configured in a square frame shape such that said first frames (50) and said second frames (40) enclose said battery cells,
said first frame (50) includes a first contact face (54) which is arranged to face said second frame (40) and a first connection portion (51) to connect to said second frame (40) and said second frame (40) includes a second contact face (44) which is arranged to face said first frame (50) and a second connection portion (41) to connect to said first frame (50),
said first frame (50) has a step-shaped first step portion (52) which forms a first space (53) where at least part of said second connection portion (41) of the second frame (40) is stored, and
at least part of said first contact face (54) of the first frame (50) is provided at said first step portion (52) of the first frame (50).

2. The battery unit (30) of claim 1, wherein said second frame (40) has a step-shaped second step portion (42) which forms a second space (43) where at least part of said first connection portion (51) of the first frame (50) is stored, at least part of said second contact face (44) of the second frame (40) is provided at said second step portion (42) of the second frame (40), and said first step portion (52) and said second step portion (42) are provided to engage with each other.

3. The battery unit (30) of claim 1 or 2, wherein said first step portion (52) of the first frame (50) is configured to be formed in a step shape when viewed in a vertical direction.

4. The battery unit (30) of any of claims 1 to 3, wherein said first step portion (52) of the first frame (50) is configured to be formed in a step shape when viewed in said second direction.

5. The battery unit (30) of any of the preceding claims 2 to 4, wherein said second step portion (42) of the second frame (40) is configured to be formed in a step shape when viewed in a vertical direction.

6. The battery unit (30) of any of the preceding claim 2 to 5, wherein said second step portion (42) of the second frame (40) is configured to be formed in a step shape when viewed in said first direction.

7. The battery unit (30) according to any of the preceding claims, wherein the frames (40) extending in the longitudinal direction of the vehicle (A) have an inverse L-shape cross-section, in particular the frames (40) extending in the longitudinal direction comprise a flange portion (40a) protruding outward in the lateral direction and formed integrally at an upper portion of said frames (40) extending in the longitudinal direction, wherein fixation holes (40b) are formed at plural points of the flange portion (40a) and the fixation holes (40b) are configured to receive a fixation member (70) in a vertical direction.

8. The battery unit (30) according to any of the preceding claims, wherein the first and/or second frames are made of a square pipe and/or each of the first and/or second frames (40, 50) are an extruded aluminum frame.

9. The battery unit (30) according to any of the preceding claims, wherein the step-shaped first portion (52) includes a projection portion (52a) extending in the first direction and in the vertical direction at a point located at an outside end portion of the first frame (50), wherein the projection portion (52a) forms at least a portion (54a) of the first contact face (54).

10. The battery unit (30) according to any of the preceding claims, wherein the step-shaped second portion (42) includes a projection portion (42a) extending in the second direction and in the vertical direction at a point located at an outside end portion of the second frame (40), wherein the projection portion (42a) forms at least a portion of the second contact face (44).

11. A vehicle (A) including a floor panel (8) and a battery unit (30) according to any of the preceding claims, wherein the battery unit (30) is provided below the floor panel (8).

12. The vehicle (A) of claim 11, wherein said battery case (32) is provided with a pair of lateral frames (50) which are either one of said first frames and said second frames and extend in the lateral direction and a pair of longitudinal frames (40) which are the other of said first frames and said second frames and extend in the longitudinal direction, said lateral frame (50) includes a lateral-frame-side contact face (54) which is either one of said first contact face and said second contact face, said vehicle (A) comprises a pair of front side frames (5) which extend forward from a forward side of said floor panel (8) with a specified gap formed, in the lateral direction, therebetween and form a vehicle body (1) together with the floor panel (8), and said lateral-frame-side contact face (54) of the lateral frame (50) positioned on the forward side is provided to face said longitudinal frame (40) and located at a specified position so as to overlap with a rear end portion of said front side frame (5) in a vertical direction.

13. The vehicle of claim 11 or 12, wherein said battery case (32) is provided with a pair of longitudinal frames (40) which are either one of said first frames and said second frames and extend in the longitudinal direction and a pair of lateral frames (50) which are the other of said first frames and said second frames and extend in the lateral direction, said longitudinal frame (40) includes a longitudinal-frame-side contact face (44) which is either one of said first contact face and said second contact face, said vehicle (A) comprises a pair of side sills (6) which extend in the longitudinal direction along both-side edge portions (8a), in the lateral direction, of said floor panel (8) and form a vehicle body (1) together with the floor panel (8), said longitudinal frame (40) is fixed to said side sill (6) with a fixation member (70), and said longitudinal-frame-side contact face (44) of the longitudinal frame (40) is provided to face said lateral frame (50) and located at a specified position so as to overlap with said fixation member (70) in a vertical direction.
